# EUROPEAN PATENT SPECIFICATION

(11) **EP 2 483 036 B1**
(45) Date of publication and mention of the grant of the patent: **02.09.2015**
(21) Application number: 10768635.4
(22) Date of filing: 30.09.2010
(51) Int. Cl.: B24D 11/00, C09K 3/14, A61C 3/06

(54) **METHOD OF MANUFACTURING A TWO PART ABRASIVE SYSTEM**
VERFAHREN ZUR HERSTELLUNG EINES ZWEITEILIGEN ABRASIVEN SYSTEMS
PROCÉDÉ DE FABRICATION D'UN SYSTÈME ABRASIF EN DEUX PARTIES

(30) Priority: 22.10.2009 US 279539 P; 30.09.2009 US 277870 P
(43) Date of publication of application: 08.08.2012
(73) Proprietor: Dentsply International Inc., York, PA 17405-0872 (US)
(72) Inventor: HUO, Xin, Dover DE 19901 (US); PIERONI, Robert, Milford DE 19963 (US)
(74) Representative: Hartz, Nikolai
(86) International application number: PCT/US2010/050848
(87) International publication number: WO 2011/041498

(56) References cited:
- JP-A- 59 201 765
- US-A1- 2008 172 951

## Description

### BACKGROUND

Finishing and polishing of dental surfaces are two important procedures, particularly in the area of dental restorations and appliances. Although the terms and others are sometimes used interchangeably, "finishing" generally refers to the removal of excess materials or gross reduction and contouring of the restoration to the desired anatomy, while "polishing" generally focuses more on final gloss and smoothness of the final restoration surface, although the terms and others are often used interchangeably. For purposes of this disclosure, the terms will generally be used to refer to the two different portions of the overall restorative process in this manner, but no actual limitation is to be imputed or implied to the present disclosure, and the two terms or others can be used without specifically limiting the invention or the scope of this disclosure, unless otherwise specifically stated. Similarly, while the present disclosure has particular application to dental restorative procedures, it will be understood that it is equally applicable to any dental procedure requiring finishing or polishing, including that of other dentition. The disclosure will generally be exemplified herein with reference to restorative dental procedures, with the understanding that this is for illustrative purposes only. In addition, while the present disclosure has particular application in the field of dentistry and will be exemplified herein as such, it is understood that the invention has application to any and all industries where finish and polish steps are employed or desired, particularly those where abrasive finishing and polishing may be useful or where final esthetics or smoothness are important.

It is known that the final smoothness of a dental restoration not only serves to enhance the esthetics or appearance of the restoration, but also reduces the subsequent chances of trapping of food debris and plaque. With an unduly rough surface, patients may experience tongue or gingival irritation. Therefore, the finishing and polishing of such surfaces is an important part of the dental restorative procedures.

In the dental art, there have developed a number of finishing and polishing systems, including for example:
- Burs (diamond, carbide or the like)
- Rubber based cups, points, discs and wheels
- Coated abrasive discs and strips
- Pastes
- Brushes
- Liquid polishes

Of the conventional systems, coated abrasive discs (which are normally rotated by a powered dental handpiece or the like) and strips are widely used by dental clinicians due to their flexibility and otherwise low impact upon the restoration. Abrasive discs or strips in particular are useful because many times the actual restoration has not fully cured by the time of the finishing and polishing procedures are employed. Vibration and pressure during finishing or polishing may cause cracking of the restoration and/or debonding from its surroundings. Coated abrasive discs and strips often have a relatively minimum impact upon the restorations than other finishing and polishing systems because they are normally coated on a thin film or paper.

However, conventional disc and strip finishing/polishing systems heretofore known in the dental arts, while often providing an acceptable final product, also have limitations. For example, it has been required in the art to perform multiple steps to achieve a desired the anatomically-conformed shapes and high luster required in the oral cavity, often using four discs or strips to achieve the desired final product. The conventional four-step discs are often designated as Coarse (or Extra Coarse), Medium, Fine and Superfine (or Extrafine, Ultrafine), or similar terms or other designations identifying them as such. Use of these discs/strips is in a series of required sequential steps, and skipping any step will often cause imperfections on the target surface. For example, if the Fine disc step is skipped, the final target surface maybe still be shiny but will likely have scratches generated by use of the Medium disc step that cannot be corrected by the Superfine (or Extrafine, Ultrafine) disc on the following step. Such scratches can provide a location for plaque to gather. Multi-step finishing/polishing also takes longer working time due to the time spent on each disc and the changing between the discs for each step.

JP 59 201 765 A discloses a method of manufacturing a two part abrasive system for finishing and polishing surfaces comprising (i) a first finishing part comprising a conventional grit particle abrasive having a particle size of from 40 µm to 100 µm, and (ii) a second polishing part comprising grit particle abrasive.

To overcome the shortcomings of the conventional four-step finishing and polishing system heretofore known in the art, a method of manufacturing a two part abrasive system for finishing and polishing is provided according to claim 1. The claimed method unexpectedly provides finishing and polishing capabilities comparable or superior to the more labor intensive and time consuming conventional four-step systems and methods of the known art.

### BRIEF DESCRIPTION OF THE DRAWINGS

**Fig. 1** is an image taken with a scanning electron microscope (SEM) and magnified 200 times of conventional fine abrasives of a competitor product.
**Fig. 2** is an image taken with a SEM and magnified 500 times of conventional superfine abrasives of a competitor product.
**Fig. 3** is an image taken with a SEM and magnified 500 times of spherical-shaped particle aggregates useful in the present invention.

### DETAILED DESCRIPTION

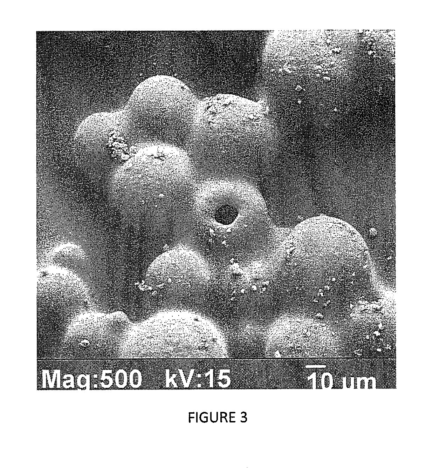

It has been unexpectedly found that when spherical-shaped particle aggregates, such as those shown in **Fig. 3** (which is an image taken with a scanning electron microscope (SEM) and magnified 500 times normal), particularly particles of nano-size are employed, a two-step finishing and polishing system can be achieved that results in a final surface equal or superior to those surfaces achieved by conventional four-step systems of the known art.

According to the present disclosure, a two-step method is provided for achieving the finishing and polishing of a surface, particularly a dental surface. As described above, a two-step method or two-part system is a great improvement over the conventional four-step methods and systems known in the art in that the working time is greatly decreased because only two parts, such as discs, are used instead of the conventional four disc system. Also, less time is needed to change the discs in between each step as only two discs would be used according to the present disclosure. In addition to the presently described two step method and system being an improvement over the conventional four-step method, the presently described two-step method and system is also superior to using only one disc. Using only one disc/strip either results in a properly anatomical shape with poor luster or an improper anatomical shape with appropriate luster. In addition, when only one disc/strip is used, scratches may remain on the surface being worked on, thus resulting in a location where dirt, debris, bacteria and plaque are able to gather.

In embodiments of the present disclosure, the first disc, also known as the finishing disc, is used to achieve bulk removal at the target site, gross contouring or the like. While the present disclosure has particular application to a two-disc or strip system and will be exemplified herein by reference to that embodiment of the invention, it will also be understood that the invention has equal application to other useful abrasive forms, including any sort of file, tool or system. Reference herein to "disc" or "strip" will be understood to have equal applicability to both of those forms even if only one such form is mentioned, as well as to any otherwise conventional form, design, tool, system, method or technique.

The first disc has a base coat layer.of some conventional thermal setting adhesive such as epoxy resin or like applied to the disc backing material, followed by application of the otherwise conventional abrasive material, such as aluminum oxide having a particle size range of from about 40 to about 100 microns, such as from about 40 to about 80 microns or from about 50 to about 70 microns. Other particles may be used of course, including not only aluminum oxide but also heat treated aluminum oxide, alumina zirconia, ceramic aluminum oxide, silicon carbide, cerium oxide, boron carbide, cubic boron nitride, diamond mixtures thereof and the like.

Over the layer of conventional abrasives is placed a top layer of a resin such as an epoxy resin or the like, and a small amount of optional top grit of less than about 20% by weight to form a size coat. In embodiments, the top grit may optionally include spherical or toroidal-shaped abrasive grit particles having imbedded therein diamond particles of from about 1 to about 3 microns, applied to the size coat, such that the size coat acts as a binder or matrix for the spherical grit. When present, the spherical grit particles have a size range of from about 40 to about 100 microns, such as from about 40 microns to about 80 microns or from about 50 microns to about 70 microns. Such particles are further described for example in US Pub. No. 2008/0172951. The spherical grit material may be conventional silica in the stated size range and of the shape described herein, and having the imbedded diamond particles also of the stated size range.

Both the conventional abrasives and the spherical grit particle abrasives must not exceed a particle size of 100 microns. An abrasive particle having a particle size of greater than 100 microns may be too aggressive causing scratches that are so significant that they cannot be corrected in finishing or polishing steps. It is theorized that in the second disc or polishing disc, described in more detail below, that a spherical grit particle having a particle size of as much as 100 microns will remove scratches throughout the polishing step because the larger particle (up to 100 microns) will begin to remove or buff out the scratches, and while polishing continues these particles will break apart and continue polishing the surface with smaller particles, thereby reducing the size of the scratches and providing an improved polished surface.

In embodiments, the second disc or polishing disc includes the spherical particle grit that is also used as the top grit in the first disc, but having a spherical particle size range from about 20 microns to about 100 microns, such as from about 40 microns to about 60 microns. Using such a first disc and second disc, a two-step finishing and polishing system can be achieved that results in a final surface comparable to those surfaces achieved by conventional four-step systems of the known art.

As used herein, "spherical" grit refers to abrasive particle grit having a spherical shape, or a generally spherical shape, including ellipsoids and other spherical permutations, which are a consequent result of the spray drying process. Thus, spheroids include spheres, ellipsoids, truncated spheres and ellipsoids, but all generally have a rounded rather than blocky structure.

The spherical grit generally has Mohs hardness of greater than about 3, and preferably from about 3 to about 10. For particular applications, the abrasive grit particles have a Mohs hardness not less than 5, 6, 7, 8, or 9. Although the spherical grit particle herein has generally been described as abrasive particles having diamonds imbedded therein, other abrasive particles are also suitable. Examples of abrasive compositions suitable for the spherical grit particles described herein include non-metallic, inorganic solids such as carbides, oxides, nitrides and certain carbonaceous materials. Oxides include silicon oxide (such as quartz, cristobalite and glassy forms), cerium oxide, zirconium oxide, aluminum oxide. Carbides and nitrides include, but are not limited to, silicon carbide, aluminum, boron nitride (including cubic boron nitride), titanium carbide, titanium nitride, silicon nitride. Carbonaceous materials include diamond, which broadly includes synthetic diamond, diamond-like carbon, and related carbonaceous materials such as fullerite and aggregate diamond nanorods. Materials may also include a wide range of naturally occurring mined minerals, such as garnet, cristobalite, quartz, corundum, feldspar, by way of example. Certain embodiments of the present disclosure, take advantage of diamond, silicon carbide, aluminum oxide, and/or cerium oxide materials, with diamond being shown to be notably effective. In addition, those of skill will appreciate that various other compositions possessing the desired hardness characteristics may be used as abrasive grit particles in the abrasive aggregates of the present disclosure. In addition, in certain embodiments according to the present disclosure, mixtures of two or more different grit particles can be used. The method of making such particles is fully described in US Pub. No. 2008/0172951.

While both the first disc and second disc may use the spherical particles having imbedded diamond particles (the combination sometimes referred to herein by such terms as the composite material, the spherical grit material with imbedded diamond particles, or the like) they preferably employ the material in different manners or applications. The first disc may employ an otherwise conventional abrasive material of a particular size range, coated or otherwise affixed to a backing layer and then covered with a size coat layer of a curable resin or an epoxy resin or the like. The spherical grit material with imbedded diamond particles is then optionally placed onto the size coat, for example, before it is cured. In somewhat of a contrast, the second disc employs the spherical grit material with imbedded diamond particles coated directly to the backing layer such as by using an intermediate adhesive layer or by applying a slurry of the material in a curable resin as will be further discussed herein below.

One useful method for preparing the first disc includes applying a base coat to a useful backing material such as paper, polyester film, cellulose layer or the like. The base coat may include any conventional adhesive, such as a resin, a conventional hardener, a conventional solvent, and colorants or dyes.

Any suitable resin may be used, such as phenolic, urea-formaldehyde, melamine, urethane, epoxy, polyester resins, mixtures thereof and the like. In embodiments, epoxy resin such as bisphenol A diglycidyl ether was used due to its high performance and low cost. Examples of suitable cross-linking agents or hardeners for epoxy resin are amines, polyamides, or combinations thereof. Known solvents include low boiling point solvents such as methylethyl ketone, isopropanol alcohol, and high boiling point solvents such as dimethyl formamide, etc., combinations thereof, and the like.

Any conventional abrasive material such as an aluminum oxide, preferably having the range of particle sizes described above, may be applied onto the formed base coat. The base coat, now bearing abrasive grains, is exposed to any device suitable for partially or fully curing so that a top coat can be applied to this partially or fully cured surface without interfering with the texture of the base coat. To this is then applied the top coat which may optionally include the spherical grit particles described herein. The top coat may use any resins or mixtures thereof described herein with respect to the base coat of the first disc. The top coat may further include a hardener and solvents described above with respect to the base coat of the first disc.

The resins may also be filled if desired. Conventional fillers such as calcium carbonate, kaolin, quartz, silica, glass, mixtures thereof and the like may be used. Other known additives such as pigments, dyes, surfactants, wetting agents, and coupling agents and the like may also be used.

In embodiments, the first disc is made by coating a backing material with an intermediate adhesive by any suitable method, such as by spray coating. The intermediate adhesive refers to any adhesive placed between the backing material and any conventional abrasive, and may form at least a portion of the base coat. The thickness of the base coat having the intermediate adhesive may be controlled by an adjustable machining gap. The conventional abrasive described herein is then applied by any suitable method over the base coat, for example, a felt presser may be used to distribute the abrasives uniformly on the base coat surface. In alternative embodiments, the conventional abrasives described herein may be applied to a backing material by first preparing a slurry of the conventional abrasives and a suitable resin. This slurry may then be applied to the backing material to form a base coat on the backing material having the conventional abrasives.

The base coat, now bearing abrasive grains, may then be exposed to any device suitable for partially or fully curing the base coat, such as a heating unit or the like. This heating unit is maintained at a temperature of from about 90°C to about 200°C, such as from about 110°C to about 180°C or from about 135°C to about 163°C. The substrate having the base coat and conventional adhesive thereon is placed through a heating unit that moves the substrate there through at a rate of from about 0.91 m/min to about 6.10 m/min, such as from about 1.28 m/min to about 3.66 m/min or from about 1.52 m/min to about 2.74 m/min. After the coating passes through the heating unit, a slurry of top coat including resin, solvents, hardener and additives such as pigments, dyes, surfactants, wetting agents, and coupling agents and the like is applied on top of the abrasive surface. Optionally, the spherical grit particles described herein can be added into the slurry of the top coat. The coated film is advanced into another heat unit for further and final curing. The coated film is placed into a heating unit that such that the heating unit moves the coated film at a rate of from about 0.91 m/min to about 6.10 m/min, such as from about 1.28 m/min to about 3.66 m/min or from about 1.52 m/min to about 2.74 m/min. The coating thickness of the first disc may be from about 100 µm to about 200 µm, such as from about 125 µm to about 185 µm or from about 150 µm to about 175 µm.

A useful method of manufacturing the second disc may include preparing a slurry of the spherical grit particles described herein, together with a resin matrix and a suitable hardener and solvent, which is described in example 4 and 5 of US Pub. No. 2008/0172951, which is hereby incorporated by reference for such a disclosure. The spherical grit particles are present in the slurry in an amount of from about 5 parts by weight to about 55 parts by weight. A polyester brand film may be used as the substrate. The film may have a thickness of from about 60 µm to about 90 µm, such as about 75 µm. A coating of the slurry may be applied to the upper surface of the substrate film using any suitable method or system, such as a blade coating system. The film may be advanced through a system, such as a blade coating station, at a rate of from about 7 m/min. to about 8 m/min., such as from about 7.5 m/min. to about 7.7 m/min. The slurry may then be coated onto the substrate film at an initial thickness of from about about50 µm to about 80 µm, such as about 62.5 µm. As the coated substrate exits the system, the film may be advanced through a heating unit. The length of the heating section within the heating unit may be from about 10 m to about 13 m, such as from about 11 m to about 12 m. This heating section may be maintained at a temperature of from about 150°C to about 200°C, such as from about 160°C to about 190°C or from about 165°C to about 180°C. The coated film may be advanced into the heating unit at a speed of from about 7 m/min. to about 8 m/min., such as from about 7.5 m/min. to about 7.7 m/min. for a total heating time of from about 1 minute to about 3 minutes, such as from about 1.5 minutes to about 2.5 minutes or about 2 minutes.. As the coated film is passed through the heating unit, the resin in the slurry may undergo partial or complete a cross-linking reaction, that is, a curing reaction. Upon exiting the heating unit, this reaction may be partially, substantially or fully complete and the aggregates may be substantially or fully bonded to the substrate by the cross-linked resin. The coating thickness of the second disc may be from about 25 µm to about 150 µm, such as from about 50 µm to about 100 µm or from about 75 µm to about 90 µm.

An example of a slurry composition suitable for the second disc may include the following components:

| **Ingredient** | **Parts by Weight** |
|---|---|
| Diamond grit aggregate | 5-55 |
| Resin (VITEL®) | 5-60 |
| Crosslinking agent | 0.1-20 |
| Solvent | 10-55 |

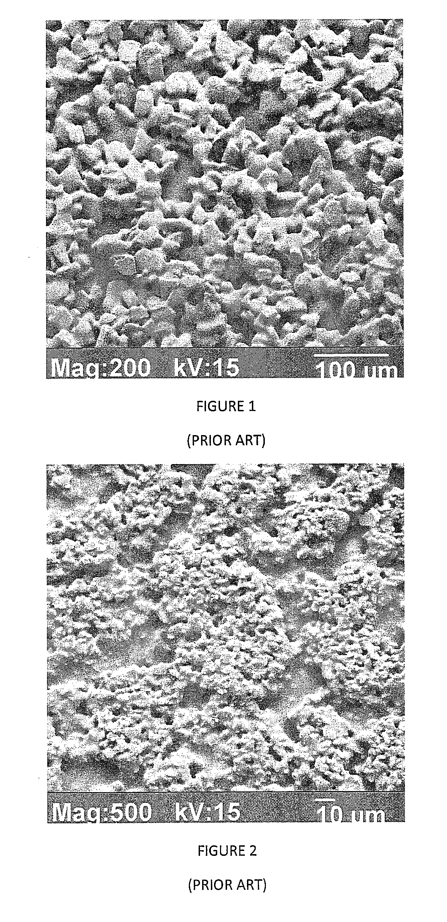

It is believed that because the spherical grit particles do not have sharp edges, they significantly reduce the number and depth of scratches normally associated with conventional abrasive systems, methods and devices, such as the coated surface shown in the SEM image of **Fig. 3**. It is further believed that the spherical grit particles in the second disc can reduce or eliminate scratches that were created by the first disc because these spherical grit particles are much greater than the conventional abrasive particles in conventional fine discs and conventional superfine disc (see **Fig. 1** and **Fig. 2**, respectively). It is yet further believed that as polishing proceeds the aggregates start to break apart and generate smaller and smaller particles, which are useful for accomplishing high luster polishing. The primary particles may be either in or close to nano-scale size range, thus they do not create new scratches which would then generally require finer abrasives to correct as with conventional systems and devices.

**Fig. 3** shows an SEM image of a spherical nano-sized silica particle, which preferably has a size range of from about 40 microns to about 100 microns and depending upon the size chosen, may be useful as both the top grit the first grit and/or the grit of the second disc. Although other conventional abrasive materials may be employed, such as silicon carbide or the like, in embodiments, the second disc employs only the spherical grit particles containing diamond particles as described.

A two-step system according to the present disclosure may include such a two-disc or two-strip set or kit and the method of employing them in a two-step procedure. For example, a two-disc system according to the invention may include a finishing disc that combines gross reduction and final contouring capabilities into the single finishing disc that still results in leaving a smooth surface finish. A polishing disc is also be provided that combines the heretofore conventionally separate steps of contacting the target surface to polish and to achieve high gloss luster into the single inventive disc.

The adhesion of coating to its substrate in both the first disc and the second disc may be measured by a pin adhesion test. In this pin adhesion test, a coating strip may be pulled against a series of pins with different diameters. The pin diameter in millimeters was recorded when a complete separation of coating from its substrate was observed. The stronger adhesion of coating to its substrate is determined by the smaller pin diameter. In other words, complete separation occurring with a pin having a smaller diameter demonstrates an improved adhesion as compared to complete separation with a pin having a larger diameter.

Specifically, the pin adhesion test may be conducted by pulling a coated strip against a series of pins having different diameters. The metal pins used herein have a decreasing diameter beginning at about 4.0 mm and decreasing in about 0.5 mm increments, until a pin having a diameter of about 1.5 mm is used to test the coated strip. In this configuration, pins having diameters of about 4.0 mm, about 3.5 mm, about 3.0 mm, about 2.5 mm, about 2.0 mm and about 1.5 mm may be used. As one of ordinary skill will understand, such pin diameters are merely exemplary and other pins having suitable diameters different from those specifically described herein may be used.

The metal pins are held in a pin adhesion device that is fastened to a flat surface, such as a bench or table. The pin adhesion device includes a chuck that is used to hold the pin for the pin adhesion test. The length of the pin outside the chuck should be longer than the width of the coated strip being tested. The coated strip is held above the pin such that the substrate of the coated strip contacts the pin surface. The strip is pulled such that the coated strip is held over and down each side of the pin. The tension of the coated strip should be sufficient to make the strip straight and rigid. This pulling on the coated strip is first done with the pin having the largest diameter, for example a 4.0 mm diameter. If no separation of coating from the substrate is observed, then the coated strip is tested on the pin having the incrementally lesser diameter, for example a 3.5 mm diameter. If flaking occurs, but no complete separation, then the coated strip is still tested on the pin having the incrementally lesser diameter. This is done until a complete separation of coating from the substrate is observed or the smallest pin, for example a 1.5 mm diameter pin is used. If the 1.5 mm is the smallest pin used, but complete separation does not occur, then the Pin# Adhesion result is recorded as <1.5 mm, which is the most desirable result for the Pin# Adhesion. However, a suitable Pin# Adhesion result is about 3.0 mm or less, such as 2.0 mm or less, such as about 1.5 mm or <1.5 mm.

To demonstrate and evaluate the performance and use of a two-step composite disc finishing/polishing system according to the present disclosure, five commercially available dental composites were obtained and finished and polished with a two-disc system described herein, and the resulting surface finish and gloss of the samples were compared to two other commercially available disc finishing/polishing systems.

### METHODS AND MATERIALS

### Commercial Resin Dental Composites:

Nanofill: Filtek Supreme Plus A2 enamel shade (3M ESPE)
Microfill: Durafill A2 enamel shade (Heraeus Kulzer)
Microhybrid/ Nanohybrid: Esthet-HD HD A2 enamel shade (Dentsply Caulk)
Nanohybrid: Premise A2 body shade (Kerr)
Minifill hybrid: Filtek Z250 A2 enamel shade (3M ESPE)

### Polishing systems:

A finish and a polish disc according to the above disclosure, hereinafter may be referred to as the "Enhance Flex NST" or "Flex NST" discs
Super-Snap discs (Shofu)
Sof-Lex discs - aluminum oxide discs (3M/ESPE)

Disc-shaped specimens (10.0 mm diameter, 2 mm thick, n=15 per resin composite and n=5 per polishing system) were made by packing uncured composite into a polytetrafluoroethylene ring mold. A Mylar strip was placed over each surface of the uncured composite to prohibit oxygen inhibition. A 0.5 kg load was placed on the mold for 30 seconds to extrude the excess material. The specimens were then light-polymerized for 40 seconds using the Demi LED light curing unit (Kerr Inc, Orange, CA). The energy of the polymerization light was monitored with a dental radiometer (Model 100, 13 mm diameter tip, Kerr Demetron, Danbury, CT, USA) and ranged from 550-600 mW/cm2. Immediately after the light-curing cycle the specimens were taken from the mold and one side of each specimen was finished with a 16-fluted carbide finishing bur (H135.31.014 #ET9- Brassler USA, Savannah, GA) with light pressure removing the initial shiny surface resulting from curing against the Mylar strip, and to simulate clinical finishing procedure. This procedure was done in a uniform manner using a precision sliding stage moved into a bur in a stabilized, horizontally positioned handpiece. The specimens were positioned in a 1mm thick metal ring and attached to the base with double-sided tape. This way the specimen was placed 1mm above the base of the ring facilitating the polishing procedure. Five specimens of each resin composite were then randomly assigned to one of the three polishing systems. One person performed the polishing. Each disc was used only once, the polishing motion was circular and constant, the discs were used dry, and the same slow-speed hand piece was used for all experiments

Polishing was performed as follows:

### Enhance Flex NST discs - total time = 52 seconds

Step 1 (medium grit): low rpm (average 10,000 rpm), 20 seconds, rinse and dry with water/air syringe for a total of 6 seconds.

Step 2 (fine grit): high rpm (average 20,000 rpm-30,000 rpm), 20 seconds, rinse and dry with water/air syringe for a total of 6 seconds.

### Super-Snap discs, Sof-Lex discs - total time =104 seconds

Step 1 (coarse grit): low rpm (average 10,000 rpm), 20 seconds, rinse and dry with water/air syringe for a total of 6 seconds.

Step 2 (medium grit): low rpm (average 10,000 rpm), 20 seconds, rinse and dry with water/air syringe for a total of 6 seconds.

Step 3 (fine grit): high rpm (average 20,000 rpm-30,000 rpm), 20 seconds, rinse and dry with water/air syringe for a total of 6 seconds.

Step 4 (superfine grit): high rpm (average 20,000 rpm-30,000 rpm), 20 seconds, rinse and dry with water/air syringe for a total of 6 seconds.

The average surface roughness (Ra, µm) was measured with a surface profilometer (TR 200 Surface Roughness Tester, Portable testers, Pittsburgh, PA) using a tracing length of 2 mm and a cutoff value of 0.8 mm to maximize filtration of surface waviness. Five tracings at different locations on each specimen were recorded. Gloss was measured using a small-area glossmeter (Novo-Curve, Rhopoint Instrumentation, East Sussex, UK), with a square measurement area of 2 × 2 mm and 60° geometry. Gloss measurements are expressed in gloss units (GU). Five tracings at different locations on each specimen were recorded

### DATA ANALYSIS

The results were analyzed by 2-way ANOVA/Tukey's test (p≤0.05).

### RESULTS

The average gloss of the three finishing/polishing systems and five composites evaluated are given in Table 1. The average surface roughness of the three finishing/polishing systems and five composites evaluated are given in Table 2.

There was no difference in gloss among the three polishing systems when used with Durafill and Esthet-HD. There was no difference between Sof-Lex and Flex NST when used with any composite, except for Filtek Supreme. There was no difference between Sof-Lex and Super-Snap when used with any composite.

All composites evaluated showed equivalent surface gloss when polished with Sof-Lex or Super-Snap. For Flex NST, Durafill, Premise, and Esthet-HD showed equivalent surface gloss; and Premise and Esthet-HD were not significantly different from Z 250.

Sof-Lex and Flex NST showed similar surface roughness values when used on all composites, except for Esthet-HD. Sof-Lex and Super-Snap showed similar surface roughness values when used on every composite, except for Z 250. Flex NST and Super-Snap showed similar surface roughness values when used on Premise.

All composites showed similar surface roughness when polished with Sof-Lex. All composites showed similar surface roughness when polished with Flex NST except for Durafill, which was significantly lower than Esthet-HD and Z 250. All composites showed similar surface roughness when polished with Super-Snap, except for Durafill that was significantly higher than Filtek Supreme, Esthet-HD and Z 250.

Table 1: Average gloss values (GU) and standard deviation (±S.D.) for the five resin composites and three finishing/polishing discs tested. Values with the same superscript are not significantly different. The lowercase superscripts refer to the rows (polishing system within composite). Uppercase superscripts refer to columns (composite within polishing system).

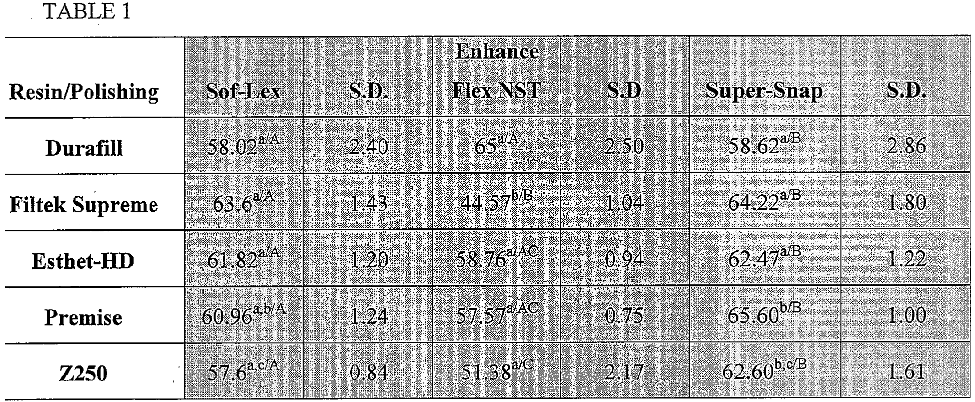

Table 2: Average surface roughness (Ra) and standard deviation (±S.D.) for the five resin composites and three finishing/polishing discs tested. Values with the same superscript are not significantly different. The lowercase superscripts refer to the rows (polishing system within composite). Uppercase superscripts refer to columns (composite within polishing system).

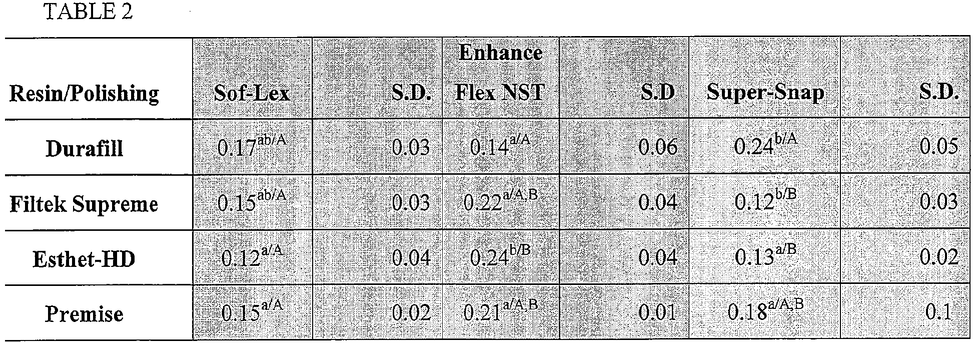

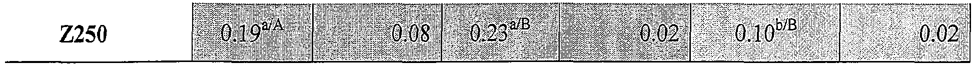

The components and functions of the base and top coat of the finishing disc of the following examples are demonstrated in Table 3 below.

**TABLE 3**

| | **Component name** | **Chemical name** | **Function** |
|---|---|---|---|
| Base Coat | Epoxy resin | Bisphenol-A diglycidyl ether | Polymer matrix |
| | Hardener | Polyamide | Crosslinking |
| | Solvents | Methyl-ethyl ketone, iso-proponal alcohol | Viscosity adjustment |
| Aluminum Oxide Abrasives Applied Onto Base Coat | | | |
| Top coat | Epoxy resin | Bisphenol-A diglycidyl ether | Polymer matrix |
| | Hardener | Polyamide | Crosslinking |
| | Solvents | Methyl-ethyl ketone, iso-proponal alcohol | Viscosity adjustment |
| | Dye | n/a | Coloring |
| | Spherical grit particles | Aggregates of fumed silica and diamond | Reduce scratches on polished surface |

### SHELF LIFE AND ADHESION EXAMPLES AND RESULTS

### Shelf life

Since the Enhance Flex NST coating is a thermal crosslinked resin containing abrasive grits and does not contain any active/reactive chemicals after being cured, the test method for shelf life is not applicable. Therefore, only a thermal aging test was conducted to confirm that the coating would not become brittle after samples were stored at elevated temperatures during shipping and handling. Test results showed that the first production batch passed the thermal aging test. The first production batch also passed the six month real life test. However, two production runs were found to delaminate after five months of storage at room temperature. Finishing discs made from these two batches were delaminating or flaking during clinical evaluation and were determined clinically unacceptable.

**TABLE 4**

| Number | Coating Speed (m/min) | Pin# Adhesion |
|---|---|---|
| 1 | 5.49 | 4.0 |
| 2 | 3.66 | 2.0 |
| 3 | 3.66 | 1.5 |
| 4 | 5.49 | 3.5 |
| 5 | 5.49 | 4.0 |
| 6 | 4.57 | 2.5 |
| 7 | 3.66 | 1.5 |
| 8 | 3.66 | 1.5 |
| 9 | 5.49 | 4.0 |
| 10 | 5.49 | 4.0 |
| 11 | 3.66 | 2.5 |

In order to solve the delamination issue, a series of experiments were conducted. Table 4 shows those experiments with different coating speed. As demonstrated in Table 4, the coating speed significantly affected the adhesion of coating. The lower coating speed resulted in stronger adhesion.

The effect of the concentration of spherical grit particles in the coating of the first disc on the adhesion of the coating was also tested. The results are demonstrated in Table 5. It can be seen that there is no significant correlation between adhesion and concentration of spherical grit particles.

**TABLE 5**

| Number | Concentration (weight %) of Spherical Grit Particles | Pin# Adhesion |
|---|---|---|
| 1 | 0 | 2 |
| 2 | 1 | 2 |
| 3 | 2 | 3 |
| 4 | 2.5 | 3.5 |
| 5 | 5 | 2.5 |
| 6 | 10 | 2.0 |
| 7 | 15 | 2.0 |
| 8 | 20 | 2.0 |

The coating speed was further reduced to 1.83 m/min. (half the lowest speed in Table 4).

**TABLE 6**

| Number | Coating speed (m/min) | Pin# adhesion |
|---|---|---|
| K | 3.66 | <1.5 |
| 1 | 2.74 | <1.5 |
| 2 | 1.83 | <1.5 |
| 3 | 2.74 | <1.5 |
| 4 | 1.83 | 1.5 |
| 5 | 2.74 | 1.5 |
| 6 | 2.74 | <1.5 |
| 7 | 2.74 | <1.5 |
| 8 | 2.74 | 1.5 |

The results in Table 6 demonstrate that the adhesion of samples #1,2,3, 7, 8 and K were improved (i.e., Pin # Adhesion <1.5). The adhesion improvement was attributed to low coating speed.

The present disclosure, sometimes termed Enhance Flex NST herein, provides a two-step finishing and polishing system that generates a desired final gloss with shorter finishing/polishing time than conventional 4-step systems. The disclosed system significantly reduces the scratches on a polished surface due, it is believed, to the spherical shape of the aggregates that include imbedded diamond particles.

## Claims

1. A method of manufacturing a two part abrasive system for finishing and polishing surfaces comprising
(i) a first finishing part comprising a conventional grit particle abrasive having a particle size of from 40 µm to 100 µm, and
(ii) a second polishing part comprising spherical grit particle abrasive having a particle size of from 40 µm to 100 µm,
the method comprising:
(1) preparing the first finishing part by
- applying a base coat of an adhesive to a backing material of the first finishing part,
- spraying a conventional abrasive to the base coat,
- drying the base coat having the conventional abrasive thereon,
- applying a top coat to the conventional abrasive such that the conventional abrasive is substantially covered, and
- drying the top coat such that the first finishing part is formed, and
(2) preparing the second polishing part by applying a spherical grit particle abrasive to a backing material of the second polishing part.

2. The method of claim 1, further comprising applying an optional layer of spherical grit particle abrasive on to the top coat of the first finishing part prior to drying the top coat.

3. The method of claim 2, wherein the optional layer of spherical grit abrasive of the first finishing part and the spherical grit particle abrasive of the second polishing part are the same.

4. The method of claim 1, further comprising applying an intermediate adhesive layer to the backing material of the second polishing part prior to application of the spherical grit particle abrasive to the backing material of the second polishing part.

5. The method of claim 1, wherein the spherical grit particle abrasive is applied to the backing material of the second polishing part by preparing a slurry of the spherical grit particle abrasive in a curing resin and applying the slurry to the backing material of the second polishing part.

6. The method of claim 1, wherein the first finishing part as applied prior to drying has a thickness of from 100 µm to 200 µm.

7. The method of claim 1, wherein the first finishing part and the second polishing part have a Pin# Adhesion of 3.0 mm or less.

8. The method of claim 1, wherein the first finishing part and the second polishing part have a Pin# Adhesion of <1.5 mm.

9. The method of claim 1, wherein the base coat of the first finishing part having the conventional abrasive thereon is at least substantially dried or cured in a unit at a temperature of from 150 °C to 200 °C.

10. The method of claim 1, wherein the base coat of the first finishing part having the conventional abrasive thereon is placed through a heating unit that moves the base coat at a rate of from 0.91 m/min to 6.10 m/min.

11. The method of claim 1, wherein the top coat of the first finishing part placed through a heating unit that moves the top coat at a rate of from 0.91 m/min to 6.10 m/min.

## Patentansprüche

1. Verfahren zur Herstellung eines abrasiven Zweikomponentensystems zum Bearbeiten und Polieren von Oberflächen, umfassend,
(i) eine erste Bearbeitungskomponente, umfassend einen Abrasivstoff mit herkömmlichem Korn einer Teilchengröße von 40 µm bis 100 µm sowie
(ii) eine zweite Polierkomponente, umfassend einen Abrasivstoff mit sphärischem Korn einer Teilchengröße von 40 µm bis 100 µm, wobei das Verfahren umfasst:
(1) Herstellung der ersten Bearbeitungskomponente durch
- Anwendung einer Grundierungsbeschichtung eines Adhäsivs auf ein Trägermaterial der ersten Bearbeitungskomponente,
- Besprühen eines konventionellen Abrasivstoffs auf die Grundierungsbeschichtung,
- Trocknen der Grundierungsbeschichtung mit dem herkömmlichen Abrasivstoff darauf,
- Anwendung einer Deckschicht auf den herkömmlichen Abrasivstoff, so dass der herkömmliche Abrasivstoff im wesentlichen bedeckt ist, und
- Trocknen der Deckschicht, sodass die erste Bearbeitungskomponente gebildet wird, und
(2) Herstellung einer zweiten Polierkomponente durch Anwendung eines Abrasivstoffs mit sphärischem Korn auf ein Trägermaterial der zweiten Polierkomponente.

2. Das Verfahren nach Anspruch 1, ferner umfassend die Anwendung einer optionalen Schicht aus einem Abrasivstoff mit sphärischem Korn auf die Deckschicht der ersten Bearbeitungskomponente vor dem Trocknen der Deckschicht.

3. Das Verfahren nach Anspruch 2, wobei die optionale Schicht aus einem Abrasivstoff mit sphärischem Korn der ersten Bearbeitungskomponente und der Abrasivstoff mit sphärischem Korn der zweiten Polierkomponente gleich sind.

4. Verfahren nach Anspruch 1, ferner umfassend die Anwendung einer Zwischenklebeschicht auf das Trägermaterial der zweiten Polierkomponente vor der Anwendung des Abrasivstoffs mit sphärischem Korn auf das Trägermaterial der zweiten Polierkomponente.

5. Das Verfahren nach Anspruch 1, wobei der Abrasivstoff mit sphärischem Korn angewendet wird auf das Trägermaterial der zweiten Polierkomponente durch Herstellung einer Aufschlämmung aus dem Abrasivstoff mit sphärischem Korn in einem härtbaren Hartz und Anwendung der Aufschlämmung auf das Trägermaterial der zweiten Polierkomponente.

6. Das Verfahren nach Anspruch 1, wobei die erste Bearbeitungskomponente, die vordem Trocknen angewendet wird, eine Stärke von 100 µm bis 200 µm aufweist.

7. Das Verfahren nach Anspruch 1, wobei die erste Bearbeitungskomponente und die zweite Polierkomponente eine Pin# Adhäsion von 3,0 mm oder weniger aufweisen.

8. Das Verfahren nach Anspruch 1, wobei die erste Bearbeitungskomponente und die zweite Polierkomponente eine Pin# Adhäsion von < 1,5 mm aufweisen.

9. Das Verfahren nach Anspruch 1, wobei eine Grundierungsbeschichtung der ersten Bearbeitungskomponente, die den herkömmlichen Abrasivstoff darauf aufweist, in einer Einheit bei einer Temperatur von 150°C bis 200°C mindestens im Wesentlichen getrocknet oder gehärtet wird.

10. Das Verfahren nach Anspruch 1, wobei die Grundierungsbeschichtung der ersten Bearbeitungskomponente, die den herkömmlichen Abrasivstoff darauf aufweist, durch eine Heizeinheit bewegt wird, die die Grundierungsbeschichtung mit einer Geschwindigkeit von 0,91 m/min bis 6,10 m/min bewegt.

11. Das Verfahren nach Anspruch 1, wobei die Deckschicht der ersten Bearbeitungskomponente durch eine Heizeinheit bewegt wird, die die Deckbeschichtung mit einer Geschwindigkeit von 0,91 m/min bis 6,10 m/min bewegt.

## Revendications

1. Procédé pour fabriquer un système abrasif en deux parties pour la finition et le polissage des surfaces, comprenant
(i) une première partie de finition comprenant des particules de grains abrasifs ayant une taille particulaire de l'ordre de 40 µm à 100 µm, et
(ii) une seconde partie de polissage comprenant des particules de grains abrasifs sphériques ayant une taille particulaire de l'ordre de 40 µm à 100 µm,
le procédé comprenant les étapes consistant à :
(1) préparer la première partie de finition en
- appliquant une couche de base d'un adhésif sur un matériau de support de la première partie de finition,
- pulvérisant un abrasif classique sur la couche de base,
- séchant la couche de base ayant l'abrasif classique sur cette dernière,
- appliquant une couche de finition sur l'abrasif classique de sorte que l'abrasif classique est sensiblement recouvert, et
- séchant la couche de finition de sorte que la première partie de finition est formée, et
(2) préparer la seconde partie de polissage en appliquant des particules de grains abrasifs sphériques sur un matériau de support de la seconde partie de polissage.

2. Procédé selon la revendication 1, comprenant en outre l'étape consistant à appliquer une couche facultative de particules de grains abrasifs sphériques sur la couche de finition de la première partie de finition avant de sécher la couche de finition.

3. Procédé selon la revendication 2, dans lequel la couche facultative de grains abrasifs sphériques de la première partie de finition et les particules de grains abrasifs sphériques de la seconde partie de polissage sont identiques.

4. Procédé selon la revendication 1, comprenant en outre l'étape consistant à appliquer une couche adhésive intermédiaire sur le matériau de support de la seconde partie de polissage avant d'appliquer les particules de grains abrasifs sphériques sur le matériau de support de la seconde partie de polissage.

5. Procédé selon la revendication 1, dans lequel les particules de grains abrasifs sphériques sont appliquées sur le matériau de support de la seconde partie de polissage en préparant une pâte de particules de grains abrasifs sphériques dans une résine durcissable et en appliquant la pâte sur le matériau de support de la seconde partie de polissage.

6. Procédé selon la revendication 1, dans lequel la première partie de finition telle qu'appliquée avant le séchage a une épaisseur de l'ordre de 100 µm à 200 µm.

7. Procédé selon la revendication 1, dans lequel la première partie de finition et la seconde partie de polissage ont une adhérence Pin# de 3,0 mm ou moins.

8. Procédé selon la revendication 1, dans lequel la première partie de finition et la seconde partie de polissage a une adhérence Pin# inférieure à 1,5 mm.

9. Procédé selon la revendication 1, dans lequel la couche de base de la première partie de finition ayant l'abrasif classique sur cette dernière est au moins sensiblement séchée ou durcie dans une unité à une température allant de 150°C à 200°C.

10. Procédé selon la revendication 1, dans lequel la couche de base de la première partie de finition ayant l'abrasif classique sur cette dernière, est placée dans une unité de chauffage qui déplace la couche de base à une vitesse de 0,91 m/min à 6,10 m/min.

11. Procédé selon la revendication 1, dans lequel la couche de finition de la première partie de finition est placée dans une unité de chauffage qui déplace la couche de finition à une vitesse de 0,91 m/min à 6,10 m/min.
